# EUROPÄISCHE PATENTANMELDUNG

(11) **EP 1 770 378 A2**
(43) Veröffentlichungstag der Anmeldung: **04.04.2007**
(21) Anmeldenummer: 06019017.0
(22) Anmeldetag: 12.09.2006
(51) Int. Cl.: G01F 1/66

(54) **Vorrichtung zum Messen der Dosiermenge von Spülzusätzen**

(30) Priorität: 29.09.2005 DE 102005046858
(71) Anmelder: Miele & Cie. KG, 33332 Gütersloh (DE)
(72) Erfinder: Anstett, Marco, 33739 Bielefeld (DE); Pichler, Reimund, 59302 Oelde (DE)

(57) **Zusammenfassung**

Die Erfindung betrifft eine Vorrichtung (1) zum Messen der Dosiermenge von Spülzusätzen für einen Spül-, Wasch- oder Desinfektionsprozess in einem Spülautomat, bei der das zu dosierende Medium über eine Messstrecke (5) mit definierter Länge (I) und definiertem Durchmesser (d) geführt wird, und bei der mittels mindestens eines Ultraschallsenders und mindestens eines Ultraschallempfängers eine von der Fließgeschwindigkeit des Mediums abhängige Laufzeit-, Amplituden- und / oder Phasenmessung durchgeführt wird, und dadurch die Art des Mediums selbst und / oder seine durchströmende Menge bestimmt wird. Um auf einfache und preiswerte Weise Querströmungen und Verwirbelungen des Mediums zu vermeiden, wird vorgeschlagen, dass der Messstrecke (5) ein ringförmiger Raum (11) vorgeschaltet ist.

## Beschreibung

Die Erfindung betrifft eine Vorrichtung zum Messen der Dosiermenge von Spülzusätzen für einen Spül-, Wasch- oder Desinfektionsprozess in einem Spülautomat, bei der das zu dosierende Medium über eine Messstrecke mit definierter Länge und definiertem Durchmesser geführt wird, und bei der mittels mindestens eines Ultraschallsenders und mindestens eines Ultraschallempfängers eine von der Fließgeschwindigkeit des Mediums abhängige Laufzeit-, Amplituden- und / oder Phasenmessung durchgeführt wird, und dadurch die Art des Mediums selbst und / oder seine durchströmende Menge bestimmt wird, wobei der Messstrecke ein ringförmiger Raum vorgeschaltet ist, der als kreisförmiger oder elliptischer Hohlzylinder oder Torus ausgebildet ist.

Eine Messvorrichtung, bei der eine von der Fließgeschwindigkeit des Mediums abhängige Laufzeit-, Amplituden- und / oder Phasenmessung mittels mindestens eines Ultraschallsenders und mindestens eines Ultraschallempfängers durchgeführt wird, ist bekannt aus O. Fiedler: "Strömungs- und Durchflussmesstechnik", R. Oldenburg Verlag München Wien 1992, S. 230 - 284, insbesondere durch die Bilder 6.38, 6.39 und 6.42. Bei den in dieser Literaturstelle beschriebenen Messeinrichtungen können Querströmungen des Mediums auftreten, die das Messergebnis verfälschen. Die Literaturstelle gibt insbesondere in Bild 6.40 eine Kompensationsmethode an, bei der zwei senkrecht zueinander stehende Messstrecken über Kreuz messen. Hierzu wird ein zweites Sensorpaar benötigt.

Messvorrichtungen der eingangs genannten Art sind aus der DE 29 24 561 C2, der DE 101 56 854 A1, der DE 296 21 964 U1 und der EP 0 479 434 A1 bekannt. Bei diesen Messvorrichtungen ist der Messstrecke ein ringförmiger Raum vorgeschaltet, der als kreisförmiger oder elliptischer Hohlzylinder oder Torus ausgebildet ist. Die gezeigten Anordnungen besitzen den Nachteil, dass die Messstrecke jeweils in den ringförmigen Raum hineinragt. Hierdurch werden Abrisskanten erzeugt, die im Bereich der Messstrecke Verwirbelungen verursachen und somit Messfehler erzeugen.

Der Erfindung stellt sich somit das Problem, bei einer Messeinrichtung der eingangs genannten Art auf einfache und preiswerte Weise Querströmungen und Verwirbelungen des Mediums zu vermeiden.

Erfindungsgemäß wird dieses Problem durch eine Messvorrichtung mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass durch eine einfache bauliche Veränderung der Messstrecke Verwirbelungen und Querströmungen vermieden werden und demzufolge eine Kompensation durch zusätzliche Sensoren nicht erforderlich ist.

Ein Ausführungsbeispiel der Erfindung ist in den Zeichnungen rein schematisch dargestellt und wird nachfolgend näher beschrieben. Es zeigt
- Figur 1: den prinzipiellen Aufbau der Messvorrichtung anhand einer Schemaskizze;
- Figur 2: einen Teilschnitt durch die Messvorrichtung;
- Figur 3: den Zuflussbereich zu der Messstrecke nach Figur 2 als Einzelheit A;

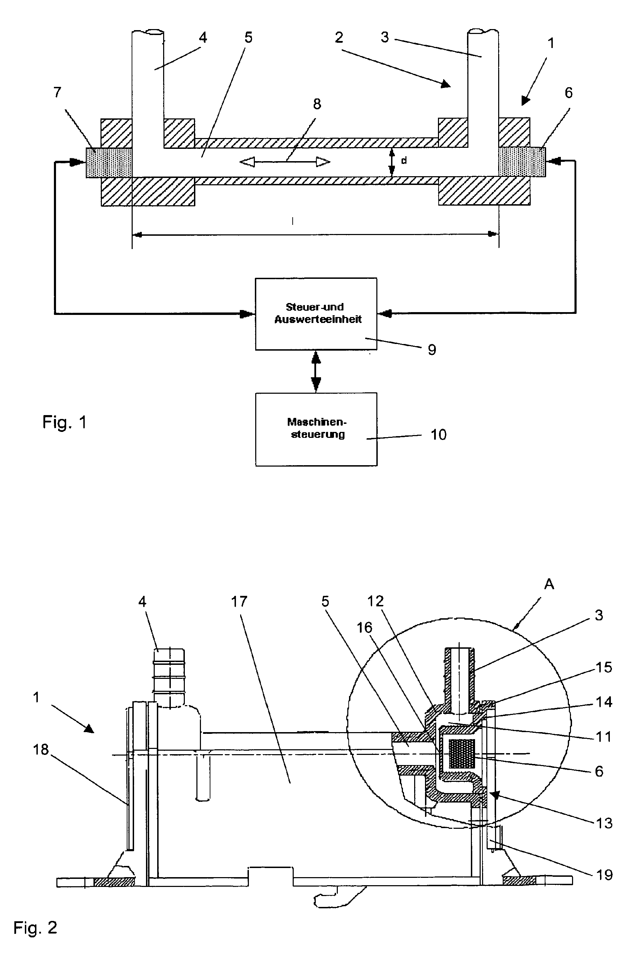

Die in Figur 1 schematisch dargestellte Messvorrichtung 1 besitzt einen Leitungsabschnitt 2, durch den das zu dosierende Medium geführt wird. Dieser kann in einen Zufluss 3, einen Abfluss 4 und die dazwischen angeordnete Messstrecke 5 unterteilt werden. Dabei hat die Messstrecke 5 eine definierte Länge I und einen definierten Durchmesser d. Der Leitungsabschnitt 2, wie er sich in der schematischen Darstellung zeigt, ist u-förmig ausgebildet, so dass unter Zusammenwirkung von später beschriebenen Ultraschallsensoren 6 und 7 am Anfang und am Ende der Messstrecke 5 das Medium selbst und/oder seine durchströmende Menge bestimmt werden kann.

Die nicht näher dargestellten Ultraschallsignale werden dabei auf der einen Seite in die Messstrecke 5 eingekoppelt und auf der anderen Seite von dem jeweiligen gegenüberliegenden Ultraschallsensor 6 oder 7 empfangen. Beide Ultraschallsensoren 6 und 7 arbeiten dabei sowohl als Sender als auch als Empfänger. Es besteht deshalb die Möglichkeit, die Art des Mediums oder seine Fließgeschwindigkeit in beiden Fließrichtungen zu ermitteln, was durch den Doppelpfeil 8 symbolisiert ist. Zur Bestimmung der Schalleigenschaften des Mediums wird von einer Steuer- und Auswerteeinheit 9 sowohl eine Laufzeitmessung als auch eine Amplitudenauswertung beider Ultraschallsignale vorgenommen. Strömt das Medium durch die Messstrecke, werden zur Messung der zu dosierenden Menge von beiden Ultraschallsensoren gleichzeitig Ultraschallsignale eingekoppelt. Der zeitliche Versatz, mit dem die gesendeten Signale den jeweiligen gegenüberliegenden Empfänger in Folge des fließenden Mediums in der Messstrecke erreichen, wird von der Steuer- und Auswerteeinheit zur Bestimmung der Fließgeschwindigkeit herangezogen. Zur Bestimmung des Volumenstromes des Mediums wird der aus dem Versatz resultierende Phasenwinkel, der durch die Steuer- und Auswerteeinheit 9 errechnet wird, der Durchmesser d sowie die Länge I der Messstrecke 5 herangezogen.

Es versteht sich nun von selbst, dass die Steuer- und Auswerteeinheit 9 in Wechselbeziehung zu einer Maschinensteuerung 10 steht, so dass die dosierte Menge je nach Bedarf in dem maschinellen Prozess eingeführt werden kann. Die Maschinensteuerung 10 kann beispielsweise in Abhängigkeit vom Volumenstrom die Einschaltdauer einer in den Zeichnungen nicht dargestellten Dosierpumpe beeinflussen. Darüber hinaus kann bei Unterschreiten eines Mindestwerts für den Volumenstrom auf einen leeren Medienbehälter oder auf eine Störung im Dosiersystem geschlossen werden und das laufende Programm abgebrochen und / oder eine Warnanzeige aktiviert werden. Somit ergibt sich ein sich selbst regelnder Steuerungsmechanismus für zu dosierende Mengen, von der ausgegangen werden kann, dass eine exakte Dosierung durch das erfindungsgemäße Dosiersystem gegeben ist.

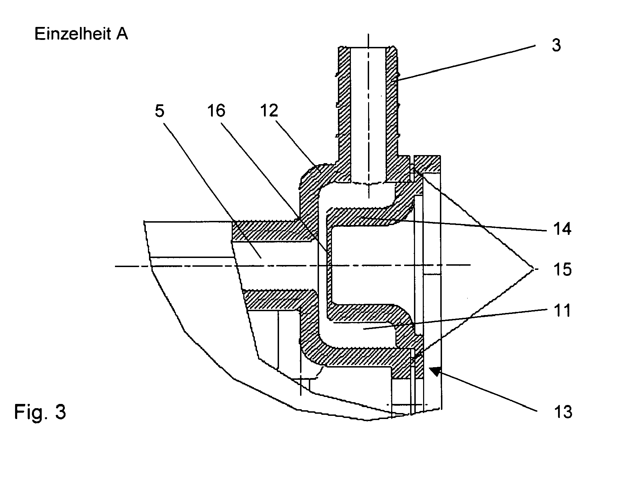

Um beim Einspeisen des Mediums in die Messstrecke 5 Verwirbelungen und dadurch bedingte Querströmungen zu vermeiden, welche das Messergebnis verfälschen können, ist der Messstrecke, wie in den Figuren 2 und 3 gezeigt, an beiden Enden ein ringförmiger Raum 11 vorgeschaltet. Dieser Raum 11 ist als kreisförmiger oder elliptischer Hohlzylinder oder Torus ausgebildet und zwischen dem Zu- und Abfluss 3 und 4 und der eigentlichen Messstrecke 5 angeordnet.

In dem in den Figuren 2 und 3 gezeigten Ausführungsbeispiel wird ein kreisförmiger Hohlzylinder dadurch erzeugt, dass in eine zylindrische Erweiterung 12 der Messstrecke eine Kappe 13 mit einer ebenfalls zylindrischen Einbuchtung 14 eingesetzt und am Rand 15 spiegelverschweißt wird. An die zylindrischen Erweiterungen 12 sind der Zufluss 3 und der Abfluss 4 als Stutzen derart angeformt, dass sie in die äußere Umfangsfläche des Raums 11 münden. Die Bodenfläche 16 der Einbuchtung, welche die Einkoppelstelle für den Ultraschall in die Messstrecke bildet, ist als dünne Folie ausgebildet und besitzt deshalb einen geringen Wellenwiderstand. Die Ultraschallsensoren 6 und 7 sind als einstückige Bauteile in die Hohlräume der Einbuchtungen 14 eingesetzt, wie in der Figur 2 schematisch angedeutet wird.

Die gesamte Messeinrichtung wird von einem Gehäuse 17 aufgenommen, in dessen Bodenteil eine Platine (nicht dargestellt) mit der Steuer- und Auswerteeinheit 9 untergebracht werden kann. Die Sender-Empfänger-Bauteile 6 und 7 sind dabei durch verschließbare Deckel 18 und 19 geschützt.

## Patentansprüche

1. Vorrichtung (1) zum Messen der Dosiermenge von Spülzusätzen für einen Spül-, Wasch- oder Desinfektionsprozess in einem Spülautomat, bei der das zu dosierende Medium über eine Messstrecke (5) mit definierter Länge (I) und definiertem Durchmesser (d) geführt wird, und bei der mittels mindestens eines Ultraschallsenders und mindestens eines Ultraschallempfängers eine von der Fließgeschwindigkeit des Mediums abhängige Laufzeit-, Amplituden- und / oder Phasenmessung durchgeführt wird, und **dadurch** die Art des Mediums selbst und / oder seine durchströmende Menge bestimmt wird, wobei der Messstrecke (5) ein ringförmiger Raum (11) vorgeschaltet ist, der als kreisförmiger oder elliptischer Hohlzylinder ausgebildet ist, und wobei die Hauptausdehnungsrichtung der Messstrecke (5) senkrecht zur Hauptausdehnungsrichtung des Raums (11) angeordnet ist
**dadurch gekennzeichnet,**
**dass** der Hohlzylinder **dadurch** erzeugt wird, dass in eine zylindrische Erweiterung (12) der Messstrecke eine Kappe (13) mit einer ebenfalls zylindrischen Einbuchtung (14) eingesetzt wird.

2. Messvorrichtung (1) nach Anspruch 1,
**dadurch gekennzeichnet,**
**dass** die Kappe (13) mit der zylindrischen Erweiterung (12) der Messstrecke am Rand (15) spiegelverschweißt ist.

3. Messvorrichtung (1) nach Anspruch 2,
**dadurch gekennzeichnet,**
**dass** an beiden Enden der Messstrecke (5) jeweils ein Ultraschallsensor (6, 7) angeordnet ist, der sowohl als Ultraschallsender als auch als Ultraschallempfänger arbeitet und dass jedem Ende der Messstrecke (5) ein ringförmiger Raum (11) vorgeschaltet ist.

4. Messvorrichtung (1) nach Anspruch 3,
**dadurch gekennzeichnet,**
**dass** der Zu- und Abfluss (3, 4) zur Messstrecke (5) durch in die äußere Umfangsfläche des Raums (11) mündende Stutzen erfolgt.
